(19) Europäisches Patentamt
European Patent Office
Office européen des brevets

(11) **EP 4 729 299 A1**

(12) **EUROPÄISCHE PATENTANMELDUNG**

(43) Veröffentlichungstag:
**22.04.2026 Patentblatt 2026/17**

(21) Anmeldenummer: 25170491.2

(22) Anmeldetag: **14.04.2025**

(51) Internationale Patentklassifikation (IPC):
**B33Y 80/00** (2015.01)   **B33Y 10/00** (2015.01)
**F23R 3/00** (2006.01)   **B22F 5/00** (2006.01)
**B22F 5/10** (2006.01)

(52) Gemeinsame Patentklassifikation (CPC):
(C-Sets verfügbar)
**F23R 3/002; B22F 5/009; B22F 12/00; B33Y 10/00;
B33Y 50/02; B33Y 80/00; F23R 3/005;** B22F 10/28;
B22F 10/80; F23R 2900/00018   (Forts.)

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH LA MA MD TN**

(30) Priorität: **15.10.2024 AT 508312024**

(71) Anmelder: **Combustion Bay One E.U.
8010 Graz (AT)**

(72) Erfinder:
• **Giuliani, Fabrice
8010 Graz (AT)**
• **Giuliani, Milo
8010 Graz (AT)**

(74) Vertreter: **Schwarz & Partner Patentanwälte
GmbH
Patentanwälte
Wipplingerstraße 30
1010 Wien (AT)**

(54) **VERFAHREN ZUR HERSTELLUNG EINER BRENNKAMMER**

(57) Die Erfindung betrifft ein Verfahren zur additiven Herstellung einer Brennkammer (5). Es wird eine Querschnittsform (2) als eine geschlossene, parametrisierte Kurve und eine Extrusionskurve (3) als eine offene, dreidimensionale Kurve definiert. Das Material wird entlang der Extrusionskurve (3) zu einem Strang (1) aufetragen, wobei ein Querschnitt des Strangs durch die Querschnittsform vorgegeben wird. Ein erstes Ende des Strangs (1) bildet eine der Einlassöffnungen (1a) und ein zweites Ende des Strangs (1) bildet eine der Auslassöffnungen (1b). Der Schritt des Auftragens wird zur Herstellung von weiteren Strängen (1) zumindest einmal wiederholt. Die Stränge (1) werden derart angeordnet, dass sie eine Wand der Brennkammer (5) bilden, wobei die Auslassöffnung (1b) von jedem Strang in einen Innenbereich der Brennkammer (5) gerichtet ist.

Fig. 1

(52) Gemeinsame Patentklassifikation (CPC): (Forts.)

C-Sets
B22F 2999/00, B22F 5/009, B22F 5/106;
B22F 2999/00, B22F 5/009, B22F 5/106,
B22F 2005/004

**Beschreibung**

Die Erfindung betrifft ein Verfahren zur additiven Herstellung einer Brennkammer, ein computerimplementiertes Verfahren mitsamt einer Vorrichtung zur Datenverarbeitung, einem Computerprogrammprodukt und einem computerlesbaren Speichermedium, sowie eine Brennkammer, die durch das erfindungsgemäße Verfahren erhältlich ist.

Eine Brennkammer ist ein zentraler Bestandteil von Verbrennungs- und Antriebssystemen, der in einer Vielzahl von technischen Anwendungen zum Einsatz kommt, darunter in Gasturbinen, Raketentriebwerken und Verbrennungsmotoren. Grundsätzlich dient die Brennkammer als Raum, in dem der Verbrennungsprozess stattfindet, bei dem chemische Energie aus einem Brennstoff in thermische Energie umgewandelt wird. Diese thermische Energie wird dann genutzt, um beispielsweise Schub in einem Raketentriebwerk zu erzeugen oder eine Turbine anzutreiben. Die Konstruktion einer Brennkammer ist entscheidend für die Effizienz und Sicherheit des gesamten Systems, da sie den Verbrennungsprozess optimieren und gleichzeitig extremen Temperaturen und Druckbedingungen standhalten muss.

Die Herstellung von Brennkammern erfordert präzise Materialien und fortschrittliche Fertigungstechniken, da sie hohe Anforderungen an Temperaturbeständigkeit, Korrosionsbeständigkeit und strukturelle Integrität erfüllen müssen. Häufig werden Materialien wie hochlegierte Stähle, spezielle Keramiken oder hitzebeständige Legierungen verwendet, die in der Lage sind, die auftretenden thermischen Belastungen und mechanischen Beanspruchungen zu bewältigen. Die genannten Materialien stoßen bei komplexen Geometrien oft an Grenzen, beispielsweise sind keramische Materialien, wie Siliziumkarbid oder Aluminiumoxid, spröde und anfällig für Rissbildung und Bruch. Eng tolerierte Bauteile erfordern zudem häufig aufwendige Nachbearbeitungsprozesse, um die erforderliche Präzision zu erreichen.

Der 3D-Druck, auch bekannt als additive Fertigung, ist eine Fertigungstechnologie, die es ermöglicht, dreidimensionale Objekte Schicht für Schicht aus digitalen Modellen zu erzeugen. Im Gegensatz zu subtraktiven Fertigungsverfahren, bei denen Material durch Fräsen, Bohren oder Schneiden entfernt wird, basiert der 3D-Druck auf dem schrittweisen Hinzufügen von Material. Dadurch können komplexe Geometrien und Strukturen hergestellt werden, die mit herkömmlichen Methoden nur schwer oder gar nicht realisierbar wären. Die Vorteile des 3D-Drucks liegen in seiner Flexibilität, Effizienz und der Fähigkeit, maßgeschneiderte Lösungen zu bieten.

Im Stand der Technik sind verschiedene Methoden bekannt, ein digitales Modell zur Verwendung im 3D-Druck bereitzustellen. Beispielsweise kann mit der Software "Blender" der Blender Foundation eine erste parametrisch definierte Kurve entlang einer zweiten parametrisch definierten Kurve zu einer gekrümmten Fläche erweitert werden. Die Software "K3DSurf" von Abderrahman Taha kann dreidimensionale Oberflächen anhand einer punktweisen parametrischen Definition visualisieren. Eine ähnliche Funktionalität bietet die Software "Supershapes" von Andrew Marsh. Die WO 0068888 A1 und die WO 2011161548 A2 zeigen Verfahren zur Erzeugung verschiedenster parametrisch definierter Kurven durch die Bereitstellung einer Gleichung, deren Parameter modifiziert werden.

Es ist die Aufgabe der vorliegenden Erfindung, ein Verfahren zur Herstellung einer Brennkammer zur Verfügung zu stellen, das zumindest einzelne Nachteile des Standes der Technik lindert bzw. behebt.

Diese Aufgabe wird durch ein Verfahren nach Anspruch 1 gelöst. Bevorzugte Ausführungsformen sind in den abhängigen Ansprüchen, der Beschreibung und den Zeichnungen angegeben.

Erfindungsgemäß wird ein Verfahren zur additiven Herstellung einer Brennkammer bereitgestellt, wobei die Brennkammer aus einer Vielzahl von Strängen mit jeweils einer Einlassöffnung und einer Auslassöffnung gebildet wird, wobei das Verfahren die folgenden Schritte umfasst:

A) Definieren einer Querschnittsform als eine geschlossene, parametrisierte Kurve,
B) Definieren einer Extrusionskurve als eine offene, dreidimensionale Kurve,
C) Auftragen eines Materials entlang eines Verlaufs der Extrusionskurve zu einem der Stränge, wobei ein Querschnitt des Strangs an jedem Punkt entlang des Verlaufs der Extrusionskurve durch die Querschnittsform gegeben ist, wobei ein erstes Ende des Strangs eine der Einlassöffnungen bildet und ein zweites Ende des Strangs eine der Auslassöffnungen bildet,
D) zumindest einmaliges Wiederholen des Schritts C zur Herstellung von zumindest einem weiteren Strang, wobei der erstgenannte Strang und alle weiteren Stränge die Vielzahl von Strängen bilden,
E) Anordnen der Vielzahl von Strängen derart, dass die Stränge eine Wand der Brennkammer bilden, wobei die Auslassöffnung von jedem Strang in einen Innenbereich der Brennkammer gerichtet ist.

Erfindungsgemäß werden zunächst in den Schritten A und B die Querschnittsform und die Extrusionskurve definiert. Die Querschnittsform (auch genannt: Formfaktor) ist eine geschlossene, parametrisierte Kurve, die Extrusionskurve ist eine offene, dreidimensionale Kurve.

Unter einer geschlossenen, parametrisierten Kurve wird hierin eine durchgehende Linie verstanden, die keinen Anfang und kein Ende hat, das heißt, sie kehrt am Ende genau zu ihrem Ausgangspunkt zurück. Diese Kurve kann durch einen Parameter beschrieben werden, der die Position auf der Kurve angibt. Während sich der Parameter von einem Anfangswert bis zu einem Endwert ändert, durchläuft die Kurve kontinuierlich jeden Punkt ihrer Bahn. Insbesondere gibt es entlang der Kurve keine plötzlichen Sprünge oder Lücken. Beispielhaft seien an dieser Stelle eine Ellipse und ein Rechteck als geschlossene Kurven genannt, wobei die Ellipse folgendermaßen parametrisiert werden kann:

$$x(t) = a \cos(t), \qquad y(t) = b \sin(t), \qquad 0 \le t \le 2\pi.$$

Eine derart definierte Ellipse hat ihren Mittelpunkt im Ursprung des Koordinatensystems, die Größe *a* bestimmt die Halbachse in einer Richtung entlang der *x*-Achse und die Größe *b* bestimmt die Halbachse in einer Richtung entlang der *y*-Achse. Ein Rechteck kann als geschlossene Kurve beispielsweise folgendermaßen parametrisiert werden:

$$x(t) = a/2 * (abs(\cos(t)) * \cos(t) + abs(\sin(t)) * \sin(t)),$$

$$y(t) = b/2 * (abs(\cos(t)) * \cos(t) - abs(\sin(t)) * \sin(t)),$$

$$0 \le t \le 2\pi.$$

Ein derart definiertes Rechteckt hat seinen Mittelpunkt im Ursprung des Koordinatensystems, die Größe *a* bestimmt die Länge des Rechtecks in einer Richtung entlang der *x*-Achse und die Größe *b* bestimmt die Breite des Rechtecks in einer Richtung entlang der *y*-Achse.

Unter einer offenen Kurve wird hierin eine durchgehende Linie verstanden, die einen Anfang und ein Ende hat, also insbesondere nicht zu ihrem Ausgangspunkt zurückkehrt. Diese Kurve existiert im dreidimensionalen Raum und kann durch einen Parameter beschrieben werden, der die Position auf der Kurve bestimmt.

An dieser Stelle sei erwähnt, dass die Schritte A und B des erfindungsgemäßen Verfahrens auch beispielsweise gleichzeitig oder in umgekehrter Reihenfolge durchgeführt werden können.

In einem nächsten Schritt C wird ein Material entlang dem Verlauf der Extrusionskurve zu einem Strang extrudiert. Dabei weist der Strang an jedem Punkt entlang der Extrusionskurve einen Querschnitt auf, der durch die Querschnittsform vorgegeben ist. In einem stark vereinfachten Beispiel kann die Extrusionskurve eine gerade Linie und die Querschnittsform ein Kreis sein. In diesem Fall hätte der Strang die Form eines Zylinders.

Der Strang weist zwei offene Enden auf, von denen ein erstes Ende eine Einlassöffnung bildet und ein zweites Ende eine Auslassöffnung bildet. Der Strang bildet somit ein hohles Objekt, in dessen Innenraum ein Fluid (beispielsweise flüssiger Wasserstoff) geleitet werden kann. Es ist vorteilhaft, wenn das Material derart zu einem Strang extrudiert wird, dass der resultierende Strang für das zu leitende Fluid im Wesentlichen undurchlässig ist.

Das in Schritt C verwendete Material kann ein duktiles, gut verformbares extrudierbares Material sein, das sich in eine flüssige oder formbare Konsistenz bringen lässt und durch eine Düse (Extruder) gepresst wird. Beim 3D-Druck wird dieses Material beispielsweise in dünnen Schichten aufgetragen, um nach und nach ein dreidimensionales Objekt zu formen. Während des Extrudierens verfestigt sich das Material nach dem Austritt aus der Düse, wodurch es in der gewünschten Form bleibt. Bevorzugt werden Materialien verwendet, die eine hohe Hitzebeständigkeit und eine hohe Druckbeständigkeit aufweisen.

Alternativ kann das in Schritt C verwendete Material auch ein hartes, nicht oder kaum extrudierbares Material sein, das beispielsweise via selektivem Laserschmelzen oder pulverbettbasiertes Schmelzen aufgetragen wird. Beispielsweise sei an dieser Stelle das Material Inconel 718 (eine Nickel-Chrom-Eisen Legierung mit Niob und Molybdän sowie geringen Anteilen von Aluminium und Titan) genannt. Derartig harte Legierungen eignen sich besonders gut für die Verwendung in Luft- und Raumfahrt, Gasturbinen, Raketenmotoren sowie Raumfahrzeugen.

Das Auftragen nach Schritt C des erfindungsgemäßen Verfahrens kann beispielsweise folgendermaßen erfolgen. Auf der Querschnittsform kann ein Bezugspunkt definiert werden, sodass die Querschnittsform die Extrusionskurve im Verlauf des Auftragens immer in diesem Bezugspunkt schneidet. Ebenso kann vorgegeben werden, dass eine Flächennormale der Querschnittsfläche an jedem Punkt der Extrusionskurve parallel zu einem Tangentenvektor der Extrusionskurve an jenem Punkt ist. Der Fachperson sind weitere mögliche Optionen hinlänglich bekannt, etwa könnte sich der Bezugspunkt im Laufe des Auftragens innerhalb der Querschnittsfläche ändern. Es ist auch möglich, dass die Querschnittsfläche gegenüber dem Tangentenvektor der Extrusionskurve einen gewissen Winkel einnimmt bzw. sich dieser Winkel im Verlauf der Extrusion verändert.

Im nächsten Schritt D des erfindungsgemäßen Verfahrens wird der Schritt C zumindest einmal wiederholt, sodass zumindest ein weiterer Strang extrudiert wird. Der in Schritt C extrudierte Strang, der in Schritt D extrudierte, weitere Strang und gegebenenfalls alle weitere Stränge werden als Vielzahl von Strängen bezeichnet.

Im nächsten Schritt E des erfindungsgemäßen Verfahrens werden die Stränge derart angeordnet, dass die Stränge eine Wand der Brennkammer bilden, wobei die Auslassöffnung von jedem Strang in einen Innenbereich der Brennkammer gerichtet ist. Das bedeutet, dass ein Fluid in die Einlassöffnungen der Stränge geleitet werden kann und in Folge im Innenraum der Brennkammer aus den Auslassöffnungen der Stränge austreten kann. Hierzu sei angemerkt, dass es durchaus denkbar ist, dass die Stränge in diesem Schritt des Verfahrens leicht verformt werden, um in eine formschlüssige Verbindung zu benachbarten Strängen gebracht werden zu können. Dies setzt eine entsprechende Wahl des verwendeten Materials voraus, welches eine derartige Verformung ermöglichen kann oder verhindern kann.

Das erfindungsgemäße Verfahren zur Herstellung einer Brennkammer bietet mehrere Vorteile. Durch eine geeignete Anordnung der Stränge kann weiters der Vorteil erhalten sein, dass ein erster Bereich eines ersten Strangs einen zweiten Bereich eines zweiten Strangs kontaktiert, wobei der genannte erste Bereich und der genannte zweite Bereich eine unterschiedliche Temperatur aufweisen können. In anderen Worten kann das erfindungsgemäße Verfahren eine Brennkammer herstellen, deren Stränge gegenseitig als Wärmetauscher fungieren. Dadurch kann das als Kraftstoff verwendete Fluid vor der Verbrennung optimal konditioniert werden. Zudem kann eine Kühlung von thermisch und/oder mechanisch besonders beanspruchten Bereichen der Brennkammer gewährleistet werden.

Im Allgemeinen kann das Verfahren auf jede Struktur ausgedehnt werden, bei der ein Wärmemanagement mit Hilfe eines durchströmenden Fluids erforderlich ist, wobei zwei benachbarte Stränge gegenseitig als Wärmetauscher dienen.

Mit Extrusionsverfahren können sehr komplexe und detaillierte Formen hergestellt werden, die mit traditionellen Methoden wie Fräsen, Gießen oder Spritzgießen schwer oder gar nicht umsetzbar wären. Hohlräume, Übergänge und feinste Strukturen lassen sich präzise umsetzen. Im Vergleich zu subtraktiven Verfahren ist der Materialverlust bei Extrusionsverfahren sehr gering, da Material nur dort aufgetragen wird, wo es benötigt wird. Dies führt zu weniger Abfall und effizienterem Materialeinsatz. Für die Herstellung kleiner Stückzahlen oder einzelner Prototypen sind Extrusionsverfahren oft kostengünstiger, da keine teuren Formen oder Werkzeuge benötigt werden. Bei herkömmlichen Verfahren müssen oft Formen oder Gusswerkzeuge gefertigt werden, was für Kleinserien unwirtschaftlich sein kann.

In einer bevorzugten Ausführungsform umfasst Schritt C weiters folgenden Schritt:
C1) Verändern der Querschnittsform entlang des Verlaufs der Extrusionskurve, wobei eine Größe der Querschnittsform und/oder ein Rotationswinkel der Querschnittsform verändert wird.

Um verschiedene Phasen der Fluidumwandlung in einem Strang, wie etwa das Verdampfen einer Flüssigkeit oder die allmähliche Erwärmung eines Dampfes, zu kontrollieren, kann die Querschnittsfläche der Extrusion variiert werden, um getrennte Kammern zu schaffen. In diesen Kammern kann der Druck annähernd konstant sein, wobei eine Kammer in Strömungsrichtung des Fluids betrachtet vorne und hinten durch eine Engstelle im Strang begrenzt ist. In anderen Worten ist es möglich, dass ein Strang das Fluid drosselt, indem ein Durchströmungsquerschnitt innerhalb des Strangs gezielt verkleinert oder vergrößert wird. Die Dimensionierung einer Kammer kann beispielsweise durch physikalische Gesetze der Thermodynamik vorgegeben sein.

In einer besonders bevorzugten Ausführungsform weist ein Strang in Strömungsrichtung des Fluids betrachtet mehrere Kammern hintereinander auf. Dies kann durch eine wiederholte Vergrößerung und Verkleinerung der Querschnittsform realisiert werden und kann eine stufenweise Änderung des Drucks, der Temperatur und/oder der Dichte des Fluids bewirken.

Weiters können die Kammern endotherm (das Fluid im Innenraum der Kammer wird von außen erwärmt) oder exotherm (das Fluid im Innenraum der Kammer wird von außen gekühlt) sein. Dieser Wärmeaustausch kann beispielsweise durch Wechselwirkung mit der Umgebung und/oder durch Wechselwirkung mit einer weiteren Kammer stattfinden. Weiters ist denkbar, dass ein Strang derart gekrümmt ist, dass zwischen einer ersten Kammer des Strangs und einer sich stromabwärts befindlichen Kammer desselben Strangs eine wärmetauschende Wechselwirkung stattfindet.

Unter der Größe der Querschnittsform wird hierin die zweidimensionale Ausdehnung der Querschnittsform verstanden. Beispielsweise kann ein kreisförmiger Querschnitt durch eine eindimensionale Änderung der Größe zu einer Ellipse werden. Es ist auch möglich, dass die Größe gleichermaßen in zwei zueinander orthogonalen Richtungen geändert wird, was auch als Skalierung bezeichnet wird.

Unter dem Rotationswinkel der Querschnittsform wird ein Winkel um jene Rotationsachse verstanden, die parallel zu einem Tangentialvektor der Extrusionskurve orientiert ist.

Es ist zudem möglich, dass sich zusätzlich oder alternativ zur Größe und/oder zum Rotationswinkel auch eine Form der Querschnittsform ändert. Beispielsweise kann die Querschnittsform am Anfang des Extrusionsprozesses ein Quadrat sein, welches sich im Laufe der Extrusion kontinuierlich zu einem Kreis ändert. Weitere Möglichkeiten, eine Form in eine andere übergehen zu lassen, sind der Fachperson hinlänglich bekannt. Wenn die Form geändert wird, kann sich das resultierende Strömungsverhalten des Fluids im Strang verbessern.

In einer bevorzugten Ausführungsform bilden alle Einlassöffnungen der Vielzahl von Strängen gemeinsam eine Einlassöffnung der Brennkammer. Wenn die Brennkammer nur einen Einlass für ein Fluid hat, bietet dies mehrere Vorteile, vor allem im Hinblick auf die Effizienz und Steuerbarkeit des Verbrennungsprozesses. Ein einzelner Einlass ermöglicht eine präzisere Kontrolle über die Menge und den Druck des zugeführten Fluids, da es keine Komplikationen durch mehrere Strömungsquellen gibt, die abgestimmt werden müssen. Dies vereinfacht nicht nur das Design, sondern verringert auch die Komplexität der Steuerungssysteme, was wiederum die Wartungsanforderungen reduziert. Darüber hinaus kann die Strömungsdynamik innerhalb der Brennkammer optimiert werden, da das Fluid auf eine vorhersehbare und gleichmäßige Weise in den Brennraum gelangt, was die Verbrennung stabiler und effizienter macht.

In einer bevorzugten Ausführungsform bilden alle Auslassöffnungen der Vielzahl von Strängen gemeinsam eine Auslassöffnung der Brennkammer. Eine einzige Auslassöffnung ins Innere der Brennkammer für ein Fluid bietet mehrere Vorteile. Eine einzige Auslassöffnung sorgt für eine gezielte und gleichmäßige Zuführung des Fluids, wodurch unerwünschte Strömungsverteilungen und lokale Überhitzungen im Inneren der Brennkammer vermieden werden können. Dies verbessert die Stabilität der Verbrennung, da das Fluid gleichmäßiger im Brennraum verteilt wird und so für eine konsistente Temperaturverteilung sorgt. Zudem wird durch einen einzigen Auslass der Druckverlust minimiert, was die Effizienz steigert. Ein weiterer Vorteil besteht darin, dass die Brennkammer so konzipiert werden kann, dass der Auslass optimal an den Bedürfnissen des Systems angepasst ist, ohne die Komplexität der Brennkammergeometrie durch mehrere Zugänge zu erhöhen. Dies erleichtert die Regelung der Verbrennungsbedingungen und verringert das Risiko von Störungen im Verbrennungsprozess.

In einer bevorzugten Ausführungsform kontaktieren sich zwei Stränge der Vielzahl von Strängen nur höchstens linienweise, bevorzugt nur höchstens punktweise. Diese Ausführungsform ermöglicht eine präzise kontrollierbaren Wärmetausch zwischen zwei Strängen bzw. zwei unterschiedlichen Bereichen desselben Strangs.

Eine derartige Ausführungsform kann weiters eine Analyse über eine Finite-Elemente-Methode erleichtert. Indem man eine Oberfläche in eine Struktur umwandelt, die einem Gitter ähnelt, ist eine Modellierung durch finite Elemente unmittelbarer und man erhält schneller Informationen über ihr mechanisches Verhalten, da eine Diskretisierung in Form von Strängen bereits erfolgt ist.

In einer bevorzugten Ausführungsform wird die Vielzahl von Strängen ringförmig angeordnet, um die Brennkammer zu bilden. Eine derartige Anordnung kann eine besonders stabile Brennkammer liefern.

Es hat sich als besonders vorteilhaft erwiesen, wenn die Stränge verstrickt werden, um die Brennkammer zu bilden. Unter "Stricken" wird hierin generell die gegenseitige Umschlingung von Strängen verstanden. Im speziellen bedeutet das, dass mehrere fluidgefüllte Stränge derart miteinander verwoben oder verflochten werden, dass sie sich gegenseitig in engem thermischen Kontakt befinden und sich zumindest bereichsweise entlang ihrer jeweiligen Wände kontaktieren. Beispielsweise kann so eine formschlüssige Verbindung zwischen zwei oder mehr benachbarten Strängen erreicht werden. Besonders bevorzugt erfolgt dieses Kontaktieren höchstens linienweise oder höchstens punktweise.

Dieser Ansatz des "Strickens" ermöglicht einen effizienten Wärmeaustausch zwischen den Strängen, da die dadurch erreichte Kontaktierung zwischen den Strängen den gegenseitigen Wärmefluss verbessert. Zudem wird durch die gestrickte Struktur die Flexibilität und mechanische Stabilität der Brennkammer erhöht, da die Stränge sich durch das Verstricken gegenseitig stützen. Dies ist besonders nützlich in Anwendungen, bei denen eine gleichmäßige Temperaturverteilung notwendig ist, wie etwa bei einer Brennkammer, da die verstrickten Stränge die Wärme schnell und gleichmäßig verteilen können.

In einem weiteren Aspekt der Erfindung wird ein computerimplementiertes Verfahren zur Verfügung gestellt, wobei die Schritte A und B des erfindungsgemäßen Verfahrens von einem Computer ausgeführt werden, wobei die Querschnittsform und die Extrusionskurve an eine Steuereinheit einer additiven Fertigungsmaschine gesendet werden und wobei die Schritte C und D des erfindungsgemäßen Verfahrens von der additiven Fertigungsmaschine ausgeführt werden. Zudem wird eine Vorrichtung zur Datenverarbeitung, umfassend Mittel zur Ausführung des computerimplementierten Verfahrens, ein Computerprogrammprodukt, umfassend Befehle, die bei der Ausführung des Programms durch einen Computer diesen veranlassen, das computerimplementierte Verfahren auszuführen und ein computerlesbares Speichermedium, umfassend Befehle, die bei der Ausführung durch einen Computer diesen veranlassen, das computerimplementierte Verfahren auszuführen, zur Verfügung gestellt.

In noch einem weiteren Aspekt der Erfindung wird eine Brennkammer zur Verfügung gestellt, die durch das erfindungsgemäße Verfahren erhältlich ist.

Vorteilhafte und nicht einschränkende Ausführungsformen der in den Ansprüchen wiedergegebenen Erfindung werden nachfolgend anhand der Zeichnungen näher erläutert.

Fig. 1 zeigt schematisch das Auftragen einer elliptischen Querschnittsform entlang einer Extrusionskurve.
Fig. 2 zeigt einen Strang, wobei sich ein Rotationswinkel der Querschnittsform entlang der Extrusionskurve ändert.
Fig. 3 zeigt eine Vielzahl von Strängen gemäß der in Fig. 2 gezeigten Ausführungsform, die eine Brennkammer bilden.
Fig. 4a zeigt einen Strang, dessen Querschnittsform sich während der Extrusion ändert, in einer Seitenansicht.
Fig. 4b zeigt einen Strang, dessen Querschnittsform sich während der Extrusion ändert, in einer Draufsicht.
Fig. 5 zeigt eine schematische Schnittansicht durch einen Strang.
Fig. 6a zeigt eine Brennkammer, deren Stränge so angeordnet sind, dass eine Verformung in axialer Richtung möglich ist, in einer Seitenansicht.
Fig. 6b zeigt eine Brennkammer, deren Stränge so angeordnet sind, dass eine Verformung in axialer Richtung möglich ist, in einer perspektivischen Seitenansicht.
Fig. 7 zeigt in einer schematischen Darstellung einen Computer und einen damit verbundenen 3D-Drucker bei der Durchführung des erfindungsgemäßen computerimplementierten Verfahrens.

Es wird nun im Detail auf Ausführungsformen verwiesen, von denen Beispiele in den beigefügten Figuren dargestellt sind. Die Wirkungen und Merkmale der Ausführungsbeispiele sowie deren Ausführungsverfahren werden unter Bezugnahme auf die beigefügten Figuren beschrieben. In den Figuren bezeichnen gleiche Bezugszeichen gleiche Elemente, und redundante Beschreibungen werden weggelassen. Die vorliegende Erfindung kann jedoch in mehreren verschiedenen Formen ausgebildet werden und ist nicht als auf die hier dargestellten Ausführungsformen beschränkt zu verstehen. Vielmehr sind diese Ausführungsformen als Beispiele vorgesehen, damit diese Offenbarung gründlich und vollständig ist und dem Fachmann die Aspekte und Merkmale der vorliegenden Erfindung vollständig vermittelt. Verfahren, Elemente und Techniken, die für den Fachmann zum vollständigen Verständnis der Aspekte und Merkmale der vorliegenden Erfindung nicht notwendig sind, werden nicht beschrieben. In den Figuren können die relativen Größen von Elementen, Schichten und Bereichen zur Verdeutlichung übertrieben dargestellt sein. Die nachstehend beschriebenen Ausführungsformen sind lediglich veranschaulichend für die Prinzipien der vorliegenden Erfindung. Es versteht sich, dass Änderungen und Abweichungen der Anordnungen und der hierin beschriebenen Details für andere Fachpersonen ersichtlich sind. Es ist daher beabsichtigt, sich nur auf den Umfang der anstehenden Patentansprüche zu beschränken und nicht auf die spezifischen Details, die zur Beschreibung und Erläuterung der Ausführungsformen hierin enthalten sind.

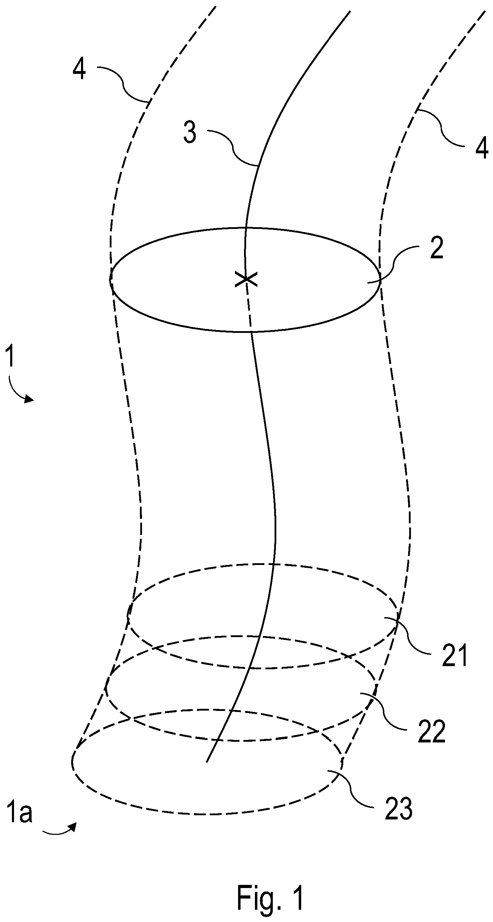

Fig. 1 zeigt eine schematische Darstellung eines Strangs 1 mit einer Einlassöffnung 1a und einer (nicht gezeigten) Auslassöffnung 1b. Der gezeigte Strang 1 weist einen einheitlichen Querschnitt auf, der durch eine als Ellipse ausgebildete Querschnittsform 2 definiert ist. Die Querschnittsform ist im Allgemeinen eine geschlossene, parametrisierte Kurve. Die in Fig. 1 gezeigte Ellipse kann beispielsweise folgendermaßen parametrisiert werden:

$$x(t) = a \cos(t), \qquad y(t) = b \sin(t), \qquad 0 \leq t \leq 2\pi.$$

Eine derart definierte Ellipse hat ihren Mittelpunkt im Ursprung des Koordinatensystems, die Größe $a$ bestimmt die Halbachse in einer Richtung entlang der x-Achse und die Größe $b$ bestimmt die Halbachse in einer Richtung entlang der $y$-Achse. An dieser Stelle sei erwähnt, dass die erfindungsgemäßen Querschnittsformen 2 nicht auf Ellipsen beschränkt sind, sondern als beliebige geschlossene Kurven definiert werden können.

Fig. 1 zeigt weiters eine Extrusionskurve 3, entlang der ein Material zu dem Strang 1 extrudiert wird. Die Extrusionskurve 3 ist im Allgemeinen eine offene, dreidimensionale Kurve. Die in Fig. 1 dargestellte Extrusionskurve 3 ist beispielsweise S-förmig.

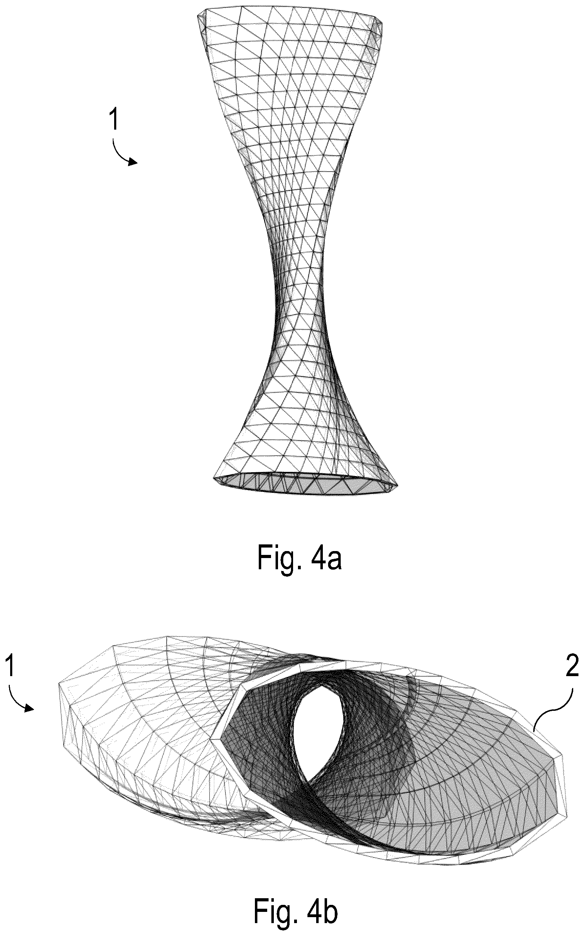

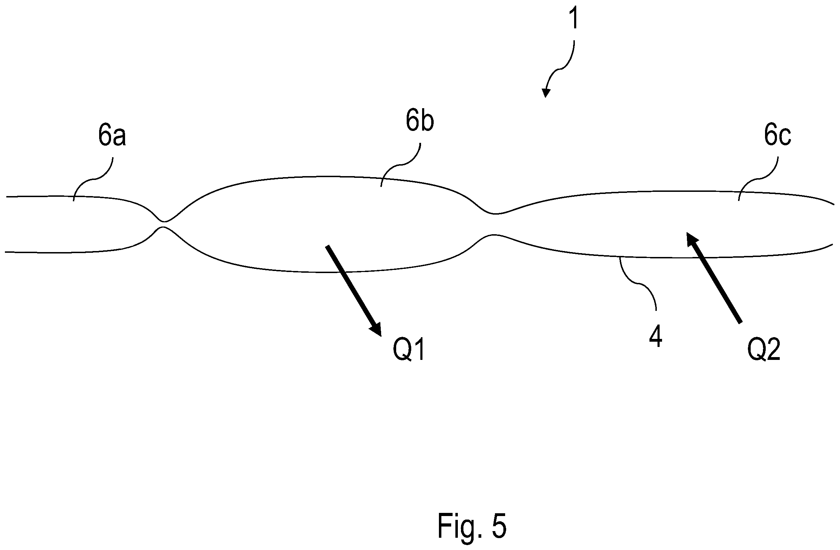

Aus Fig. 1 ist es ersichtlich, dass ein Querschnitt des Strangs 1 an jedem Punkt entlang des Verlaufs der Extrusionskurve 3 durch die Querschnittsform 2, 21, 22, 23 gegeben ist. In der gezeigten Ausführungsform sind die Querschnittsformen 2, 21, 22, 23 entlang des Strangs 1 gleich groß und allesamt als Ellipse ausgebildet. Es ist jedoch auch möglich, dass sich die Querschnittsform 2 entlang des Verlaufs der Extrusionskurve ändert (siehe Figs. 4 und 5).

Im Mittelpunkt der Querschnittsform 2 ist ein Bezugspunkt mit einem Kreuz markiert. Dieser Bezugspunkt gibt an, in welchem Punkt die Querschnittsform 2 die Extrusionskurve 3 schneidet. In der gezeigten Ausführungsform liegt der Bezugspunkt aller Querschnittsformen 2, 21, 22, 23 im Mittelpunkt der jeweiligen Ellipse. Es ist jedoch auch möglich, dass der Bezugspunkt nicht im Mittelpunkt liegt und/oder sich die Position des Bezugspunkts innerhalb der Querschnittsform 2 im Verlauf des Auftragens verändert.

Da im Verlauf des Auftragens das Material entlang des Umfangs der Querschnittsform 2 extrudiert wird, bildet sich ein hohler Körper mit einer ersten Öffnung, die als Einlassöffnung 1a bezeichnet wird, einer zweiten Öffnung, die als Auslassöffnung 1b bezeichnet wird und einer Wand 4.

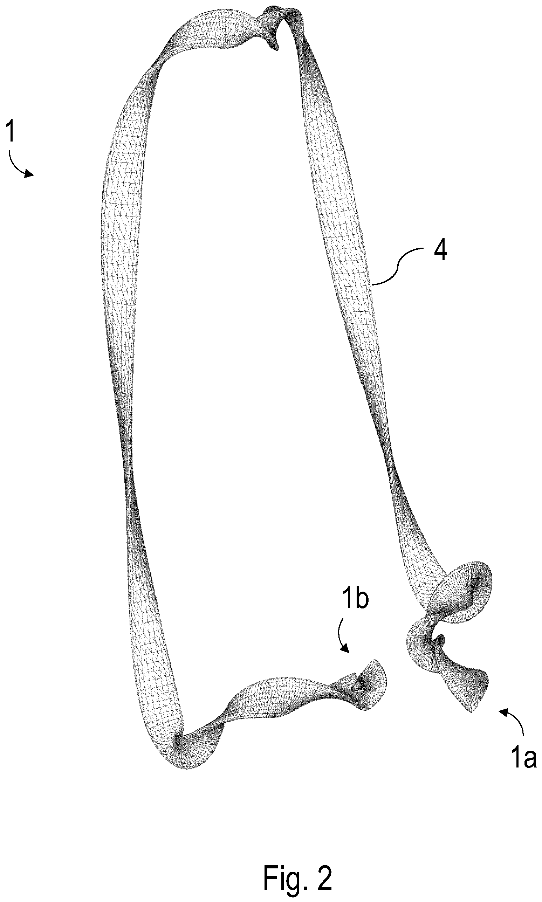

Fig. 2 zeigt einen fertig extrudierten Strang 1 mit einer Einlassöffnung 1a, einer Auslassöffnung 1b und einer Wand 4. In der gezeigten Ausführungsform ist die Querschnittsfläche als Ellipse ausgebildet.

Im Unterschied zu Fig. 1 wurde die Querschnittsform 2 in Fig. 2 entlang des Verlaufs der Extrusionskurve 3 verändert, wobei ein Rotationswinkel der Querschnittsform 2 verändert wurde. Unter dem Rotationswinkel der Querschnittsform 2 wird ein Winkel um jene Rotationsachse verstanden, die parallel zu einem Tangentialvektor der Extrusionskurve 3 orientiert ist. Dabei ist ersichtlich, dass sich die Rotationsachse ändern kann, wenn die Extrusionskurve 3 gekrümmt ist.

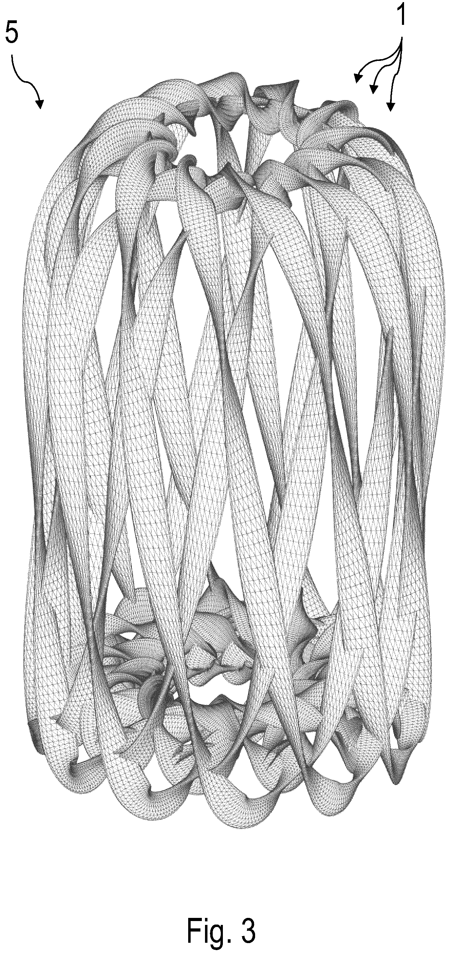

Fig. 3 zeigt eine Vielzahl von Strängen 1, wobei jeder der Stränge 1 im Wesentlichen wie in Fig. 2 dargestellt ausgebildet ist. Die Stränge 1 sind derart angeordnet, dass sie eine Wand einer Brennkammer 5 bilden, wobei die Auslassöffnung 1b von jedem Strang 1 in einen Innenbereich der Brennkammer 5 gerichtet ist.

Bei der gezeigten Brennkammer 5 ist erkennbar, dass die Stränge 1 auch so angeordnet werden können, dass sie sich schneiden. Für diese Ausführungsform kann also an geeigneten Bereichen der Stränge 1 durch ein entsprechendes Fertigungsverfahren Material von der Wand 4 abgetragen werden, sodass zwei benachbarte Stränge 1 ineinander eingreifen können. In dieser Ausführungsform kann eine direkte Wechselwirkung zwischen einem Fluid in einem ersten Strang 1 und einem Fluid in einem benachbarten zweiten Strang 1 erfolgen. Auf diese Weise kann der Wärmetausch zwischen zwei benachbarten Strängen 1 noch kontrollierter beeinflusst werden. Ebenso ist es möglich, dass ein Bereich eines Strangs 1, der sich mit einem weiteren Strang 1 überschneiden wird, während des Herstellungsprozesses beim Auftragen des Materials ausgespart wird.

Die Geometrie eines Strangs 1 wird in der Regel von der Funktionalität des herzustellenden Objekts definiert. Beispielsweise kann das erfindungsgemäße Verfahren dazu dienen, eine Brennkammer herzustellen, deren Wände einen Kraftstoff vor dem Einspritzen in das Innere der Brennkammer konditionieren können. Hierbei kann der Kraftstoff innerhalb eines Strangs 1 als Kühlmittel für der Flamme zugewandte Wände 4 fungieren. Eine Änderung der Querschnittsform 2 und/oder eine Änderung des Rotationswinkels wird durch den Wärmefluss, dem ein Strang 1 ausgesetzt ist, und der lokalen Temperatur des transportierten Fluids bestimmt.

Die Anzahl der Stränge 1 wird von der erreichbaren Feinheit in Bezug auf die additive Fertigung bestimmt, je feiner, desto mehr Stränge 1 können verwendet werden.

Fig. 4a und Fig. 4b zeigen in einer schematischen Darstellung eine weitere Ausführungsform eines Strangs 1, wobei sich die Querschnittsform 2 des gezeigten Strangs 1 entlang des Verlaufs der Extrusionskurve 3 verändert hat. Insbesondere hat sich sowohl eine Größe der Querschnittsform 2 als auch ein Rotationswinkel der Querschnittsform 2 geändert.

Fig. 4a zeigt einen Strang 1 in einer Seitenansicht. Die Querschnittsform 2 des Strangs 1 ist eine Ellipse und die Extrusionskurve 3 des Strangs 1 ist im Wesentlichen eine gerade Linie. Im Verlauf des Auftragens hat sich bei dem gezeigten Strang sowohl die Größe als auch ein Rotationswinkel um die Extrusionskurve geändert. Die Größe ist im Verlauf der Extrusion zuerst kleiner geworden und wurde anschließend auf die ursprüngliche Größe vergrößert. Der Rotationswinkel hat sich im Wesentlichen kontinuierlich von 0° auf 180° geändert.

Eine derartige Drehung (auch Twist genannt) der Querschnittsform kann bei einer geeigneten Wahl der Querschnittsform eine Engstelle entlang eines Strangs 1 erzeugen, sodass dieser enge Bereich als effektive Düse wirkt.

Fig. 4b zeigt den Strang 1 aus Fig. 4a in einer Draufsicht. Für die Beschreibung des Strangs 1 wird auf die Beschreibung zu Fig. 4a verwiesen.

Fig. 5 zeigt eine schematische Schnittansicht eines Strangs 1. Der gezeigte Strang 1 weist zumindest drei Kammern 6a, 6b, 6c auf, wobei eine erste Kammer 6a ein Fluid mit einer ersten Temperatur und einem ersten Druck leitet, eine zweite Kammer 6b ein Fluid mit einer zweiten Temperatur und einem zweiten Druck leitet und eine dritte Kammer 6c ein Fluid mit einer dritten Temperatur und einem dritten Druck leitet.

Es ist ersichtlich, dass sich die Querschnittsform 2 des gezeigten Strangs 1 entlang des Verlaufs der Extrusionskurve 3 verändert hat. Insbesondere wurden durch Veränderungen der Größe der Querschnittsform drei Kammern 6a, 6b, 6c sowie dazwischenliegende Verengungen geschaffen, welche als Drossel dienen können.

Durch die Pfeile Q1, Q2 in Fig. 5 ist angedeutet, dass der Strang 1 über seine Wand 4 Wärme mit der Umgebung und/oder einem benachbarten Strang tauschen kann. Insbesondere kann Wärme abgegeben werden oder aufgenommen werden, wobei die Wärme dem im Strang geleiteten Fluid entnommen oder zugeführt wird.

Es ist vorteilhaft, wenn der Druck innerhalb einer Kammer 6a, 6b, 6c im Wesentlichen konstant ist. Bezugnehmend auf Fig. 5 kann die erste Kammer 6a beispielsweise eine Hochdruckkammer sein. Beim Übertritt in die zweite Kammer 6b kann der Druck des Fluids beispielsweise halbiert werden, sodass die zweite Kammer 6b eine Mitteldruckkammer darstellt. Nach einer weiteren Halbierung des Drucks kann die dritte Kammer 6c beispielsweise eine Kammer bereitstellen, die das Fluid mit Umgebungsdruck leitet.

Wird ein Gas als Fluid verwendet, folgt der Gasmassenstrom d$m$/d$t$ dem Gesetz der kompressiblen Gase:

$$\frac{\mathrm{d}m}{\mathrm{d}t} = \sqrt{\frac{\gamma}{r\,T}}\, P \left(\frac{2}{\gamma+1}\right)^{\frac{\gamma+1}{2(\gamma-1)}} S$$

Hier bezeichnet S die Querschnittsfläche im Düsenhals zwischen zwei Kammern, $\gamma$ ist der Isotropenexponent des Gases, P ist der Druck in der Kammer stromaufwärts der Düse, $T$ ist die Temperatur des Gases in der Kammer stromaufwärts der Düse und r ist die spezifische Gaskonstante.

Bevorzugt werden die drei in Fig. 5 gezeigten Kammern 6a, 6b, 6c somit als Druckkaskade ausgeführt, wobei eine stufenweise Dekompression des geleiteten Fluids erfolgt. Erreicht ein Fluid beim Durchtreten durch eine Düse zwischen zwei Kammern eine Geschwindigkeit von Mach 1 oder mehr, spricht man auch von einer kritischen, aktivierten oder gedrosselten Düse. Anderenfalls spricht man von einer unterkritischen Düse.

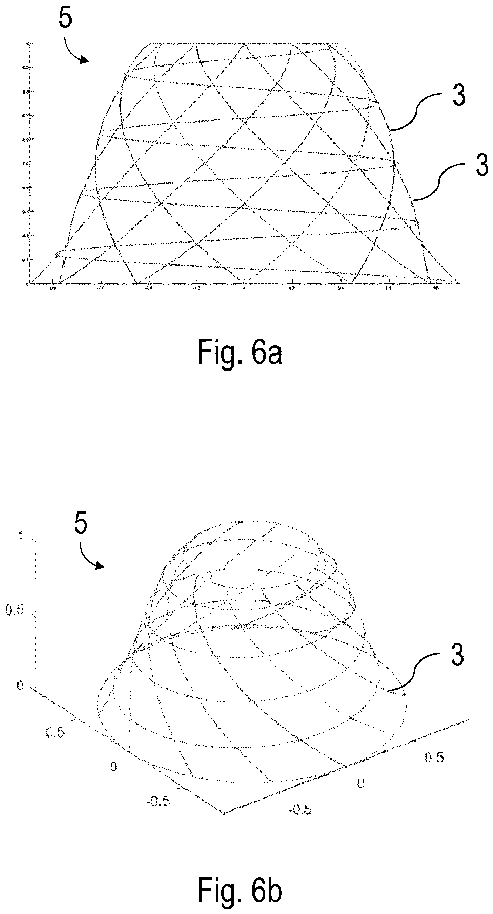

Fig. 6a und Fig. 6b zeigen in einer schematischen Darstellung eine Ausführungsform einer erfindungsgemäßen Brennkammer 5, wobei eine Vielzahl von Strängen 1 in zueinander parallelen Spiralen ringförmig angeordnet ist. Zur besseren Visualisierung wurden anstelle der Stränge 1 die jeweiligen Extrusionskurven 3 als eindimensionale Linien gezeichnet. Eine derartige Anordnung kann zu besonders vorteilhaften mechanischen Eigenschaften der Brennkammer 5 führen. Etwa kann die Brennkammer so Vibrationen absorbieren. Beispielsweise weist die gezeigte Brennkammer eine Elastizität entlang einer axialen Richtung auf.

Fig. 6a zeigt die Brennkammer 5 in einer Seitenansicht und Fig. 6b zeigt die Brennkammer in einer perspektivischen Seitenansicht. In beiden Abbildungen ist ersichtlich, dass die Extrusionskurven jeweils einen Abschnitt einer konischen Spirale bilden.

Die in Fig. 6a und Fig. 6b gezeigte Ausführungsform einer Brennkammer 5 soll lediglich dazu dienen, die elastische Eigenschaft der gezeigten Struktur zu verdeutlichen. Alternative Anordnungen von Strängen 1, die eine Verformung in zumindest einer Raumrichtung zulassen, sind der Fachperson hinlänglich bekannt.

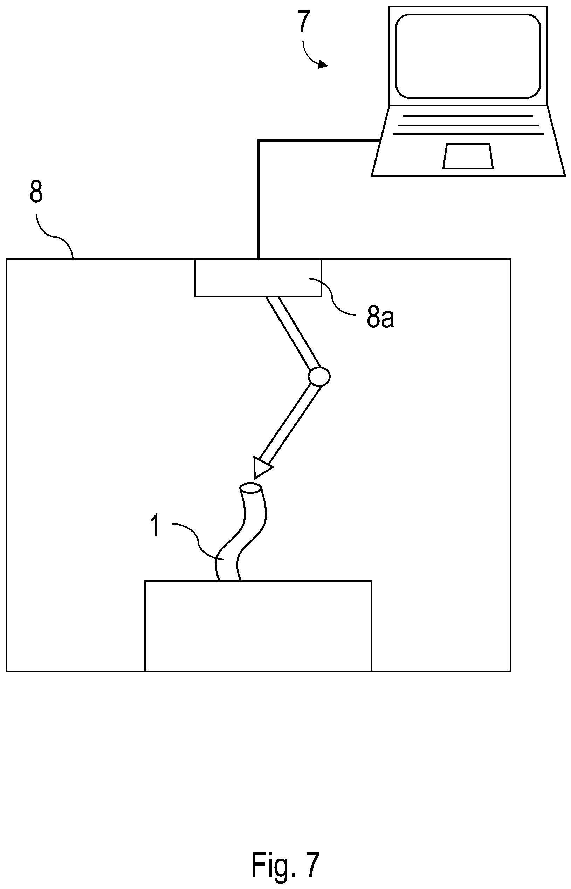

Fig. 7 zeigt in einer schematischen Darstellung einen Computer und einen damit verbundenen 3D-Drucker. Bei der Durchführung des erfindungsgemäßen computerimplementierten Verfahrens werden die Schritte A und B von dem Computer ausgeführt. Die Querschnittsform 2 und die Extrusionskurve 3 werden an eine Steuereinheit 8a des 3D-Druckers 8 gesendet. In Folge werden die Schritte C und D von dem 3D-Drucker 8 durchgeführt.

Die Steuereinheit 8a des 3D-Druckers 8 ist dazu konfiguriert, das Material entlang der Extrusionskurve 3 aufzutragen. Fig. 7 zeigt einen Strang 1, der gerade von dem 3D-Drucker 8 hergestellt wird.

Es ist ersichtlich, dass verschiedene Merkmale in einer einzigen Ausführungsform zusammengefasst werden, um die Darstellung der Erfindung zu vereinfachen. Diese Art der Offenbarung ist nicht so zu verstehen, dass die beanspruchten Ausführungsformen mehr Merkmale erfordern, als in den einzelnen Ansprüchen ausdrücklich angegeben sind. Wie die Ansprüche zeigen, liegt der Erfindungsgegenstand vielmehr in weniger als allen Merkmalen einer einzigen offengelegten Ausführungsform.

**Patentansprüche**

1. Verfahren zur additiven Herstellung einer Brennkammer (5), wobei die Brennkammer (5) aus einer Vielzahl von Strängen (1) mit jeweils einer Einlassöffnung (1a) und einer Auslassöffnung (1b) gebildet wird, umfassend die folgenden Schritte:

    A) Definieren einer Querschnittsform (2) als eine geschlossene, parametrisierte Kurve,
    B) Definieren einer Extrusionskurve (3) als eine offene, dreidimensionale Kurve,
    C) Auftragen eines Materials entlang eines Verlaufs der Extrusionskurve (3) zu einem der Stränge (1), wobei ein Querschnitt des Strangs (1) an jedem Punkt entlang des Verlaufs der Extrusionskurve (3) durch die Querschnittsform (2) gegeben ist, wobei ein erstes Ende des Strangs (1) eine der Einlassöffnungen (1a) bildet und ein zweites Ende des Strangs (1) eine der Auslassöffnungen (1b) bildet,
    D) zumindest einmaliges Wiederholen des Schritts C zur Herstellung von zumindest einem weiteren Strang (1), wobei der erstgenannte Strang (1) und alle weiteren Stränge (1) die Vielzahl von Strängen (1) bilden,
    E) Anordnen der Vielzahl von Strängen (1) derart, dass die Stränge (1) eine Wand der Brennkammer (5) bilden, wobei die Auslassöffnung (1b) von jedem Strang in einen Innenbereich der Brennkammer (5) gerichtet ist.

2. Verfahren nach Anspruch 1, wobei Schritt C weiters folgenden Schritt umfasst:
   C1) Verändern der Querschnittsform (2) entlang des Verlaufs der Extrusionskurve (3), wobei eine Größe der Querschnittsform (2) und/oder ein Rotationswinkel der Querschnittsform (2) verändert wird.

3. Verfahren nach einem der vorhergehenden Ansprüche, wobei alle Einlassöffnungen (1a) der Vielzahl von Strängen (1) gemeinsam eine Einlassöffnung der Brennkammer (5) bilden.

4. Verfahren nach einem der vorhergehenden Ansprüche, wobei alle Auslassöffnungen (1b) der Vielzahl von Strängen (1) gemeinsam eine Auslassöffnung der Brennkammer (5) bilden.

5. Verfahren nach einem der vorhergehenden Ansprüche, wobei sich zwei Stränge (1) der Vielzahl von Strängen (1) nur höchstens linienweise, bevorzugt nur höchstens punktweise, kontaktieren.

6. Verfahren nach einem der vorhergehenden Ansprüche, wobei die Vielzahl von Strängen ringförmig angeordnet wird, um die Brennkammer zu bilden.

7. Computerimplementiertes Verfahren nach einem der vorhergehenden Ansprüche, wobei die Schritte A und B von einem Computer (7) ausgeführt werden, wobei die Querschnittsform (2) und die Extrusionskurve (3) an eine Steuereinheit (8a) einer additiven Fertigungsmaschine (8) gesendet werden und wobei die Schritte C und D von der additiven Fertigungsmaschine (8) ausgeführt werden.

8. Vorrichtung zur Datenverarbeitung, umfassend Mittel zur Ausführung des Verfahrens nach Anspruch 7.

9. Computerprogrammprodukt, umfassend Befehle, die bei der Ausführung des Programms durch einen Computer diesen veranlassen, das Verfahren nach Anspruch 7 auszuführen.

10. Computerlesbares Speichermedium, umfassend Befehle, die bei der Ausführung durch einen Computer diesen veranlassen, das Verfahren nach Anspruch 7 auszuführen.

11. Brennkammer (5), erhältlich durch das Verfahren nach einem der Ansprüche 1 bis 6.

Fig. 1

Fig. 2

Fig. 3

Fig. 4a

Fig. 4b

Fig. 5

Fig. 6a

Fig. 6b

7

8

8a

1

Fig. 7

Europäisches
Patentamt

European
Patent Office

Office européen
des brevets

## EUROPÄISCHER RECHERCHENBERICHT

Nummer der Anmeldung

EP 25 17 0491

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | US 2022/250153 A1 (LI XIAOYANG [CN] ET AL) 11. August 2022 (2022-08-11) <br> * Absatz [0002] - Absatz [0004]; Abbildungen * <br> ----- | 1-11 | INV. <br> B33Y80/00 <br> B33Y10/00 <br> F23R3/00 <br> B22F5/00 <br> B22F5/10 |
| A | WO 2024/010565 A1 (SIERRA TURBINES INC [US]) 11. Januar 2024 (2024-01-11) <br> * Absatz [0058] - Absatz [0061]; Abbildungen 2A-F * <br> ----- | 1-11 | |
| A | EP 3 460 189 A1 (UNITED TECHNOLOGIES CORP [US]) 27. März 2019 (2019-03-27) <br> * Absätze [0008], [0055], [0056] * <br> ----- | 1-11 | |

RECHERCHIERTE SACHGEBIETE (IPC)

B33Y
C22C
B22F

Der vorliegende Recherchenbericht wurde für alle Patentansprüche erstellt

| Recherchenort | Abschlußdatum der Recherche | Prüfer |
|---|---|---|
| Den Haag | 24. Juli 2025 | Mootz, Frank |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

24-07-2025

| Im Recherchenbericht angeführtes Patentdokument | Datum der Veröffentlichung | Mitglied(er) der Patentfamilie | Datum der Veröffentlichung |
|---|---|---|---|
| US 2022250153 A1 | 11-08-2022 | CN 110421165 A | 08-11-2019 |
| | | US 2022250153 A1 | 11-08-2022 |
| | | WO 2021004431 A1 | 14-01-2021 |
| WO 2024010565 A1 | 11-01-2024 | KEINE | |
| EP 3460189 A1 | 27-03-2019 | EP 2938827 A1 | 04-11-2015 |
| | | EP 2938828 A1 | 04-11-2015 |
| | | EP 3460189 A1 | 27-03-2019 |
| | | US 2015345298 A1 | 03-12-2015 |
| | | US 2015345304 A1 | 03-12-2015 |
| | | US 2015345396 A1 | 03-12-2015 |
| | | US 2018334909 A1 | 22-11-2018 |
| | | WO 2014105108 A1 | 03-07-2014 |
| | | WO 2014105109 A1 | 03-07-2014 |
| | | WO 2014105113 A1 | 03-07-2014 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0068888 A1

- WO 2011161548 A2